# NEUE EUROPÄISCHE PATENTSCHRIFT

(11) **EP 1 224 645 B2**
(45) Veröffentlichungstag und Bekanntmachung des Hinweises auf die Entscheidung über den Einspruch: **17.02.2010**
(45) Hinweis auf die Patenterteilung: 05.11.2003
(21) Anmeldenummer: 00965738.8
(22) Anmeldetag: 11.08.2000
(51) Int. Cl.: G08G 1/09, G01C 21/32, G06T 9/00, G09B 29/10

(54) **VERFAHREN ZUR CODIERUNG UND DECODIERUNG VON OBJEKTEN IN EINEM VERKEHRSWEGENETZ**
METHOD FOR CODING AND DECODING OBJECTS IN A ROAD TRAFFIC NETWORK
PROCEDE DE CODAGE ET DE DECODAGE D'OBJETS DANS UN RESEAU DE VOIES DE CIRCULATION

(30) Priorität: 07.09.1999 DE 19942524; 26.02.2000 DE 10009149
(43) Veröffentlichungstag der Anmeldung: 24.07.2002
(73) Patentinhaber: ROBERT BOSCH GMBH, 70442 Stuttgart (DE)
(72) Erfinder: HESSING, Bernd, 31188 Holle (DE); HAHLWEG, Cornelius, 31139 Hildesheim (DE); KERSKEN, Ulrich, 31199 Diekholzen (DE)
(86) Internationale Anmeldenummer: PCT/DE2000/002701
(87) Internationale Veröffentlichungsnummer: WO 2001/018769

(56) Entgegenhaltungen:
- EP-A- 0 725 502
- EP-A1- 1 105 856
- EP-A2- 0 921 509
- WO-A1-00/08616
- DE-A- 19 638 515
- DE-A1- 19 742 414
- DE-A1- 19 750 786
- DE-A1- 19 847 375
- FR-A- 2 760 282
- US-A- 5 745 867

## Beschreibung

Die Erfindung betrifft ein Verfahren zur Codierung und ein Verfahren zur Decodierung von Objekten in einem Verkehrswegenetz, zu denen Informationen von jeweils einem Sender an einen Empfänger in einem Navigationsgerät übertragen werden und zu deren Codierung und Decodierung im Sender und Empfänger unterschiedliche Datenbanken, insbesondere digitale Karten des Verkehrswegenetzes, benutzt werden.

Zur Übertragung von ortsbezogenen Informationen, beispielsweise Verkehrsmeldungen, sind verschiedene Verfahren bekanntgeworden. So wird beispielsweise beim TMC (traffic message channel) ein Ort anhand eines Ortscodes übertragen. Seine geographische Lage und damit auch die örtliche Zuordnung der Meldung werden erst durch eine sogenannte Ortsdatenbank im Empfänger ermöglicht. Zu Navigationszwecken werden digitale Straßenkarte verwendet, bei denen die einzelnen Orte und andere Objekte durch ihre geographische Lage und durch ihre Straßenverbindungen gekenntzeichnet sind. Zur Übertragung beliebiger ortsbezogener Informationen an Empfänger, die eine geeignete Datenbank enthalten, erfolgt daher in zunehmendem Maße eine Codierung - auch Referenzierung genannt - mit Hilfe eines geographischen Kontextes. Diese Referenzierung geht über die Angabe von geographischen Daten hinaus, da diese Daten Mehrdeutigkeiten nicht ausschließen können (beispielsweise eine Straße unter oder über einer Brücke). Außerdem können Abweichungen der Datenbanken, beispielsweise verschiedener Hersteller, vorliegen.

Aus DE 198 35 051.1 ist eine Einrichtung zur Codierung und zur Decodierung von Orten bekanntgeworden, bei welchen der Code aus einem Vereinbarungsteil und je einem codierten Ort aus allen Koordinatenteilen besteht, der mehrere Koordinatenpaare enthält, wobei ein Koordinatenpaar die senderseitig gespeicherten Koordinaten des codierten Ortes und mindestens ein weiteres Koordinatenpaar mindestens einen Hilfspunkt darstellt und der Vereinbarungsteil mindestens die Anzahl dieser im Koordinatenteil enthaltenen Koordinatenpaare enthält. Mit dieser Einrichtung ist es jedoch nicht ohne weiteres möglich, Objekte zu codieren und zu decodieren, die in der empfängerseitigen Datenbank nicht oder nicht in identischer Form, insbesondere abweichenden Koordinaten, vorhanden sind.

Aus der EP 0 921509 A2 ist ein System zur Aktualisierung einer geographischen Datenbank bekannt. Dort werden Sensordaten von Fahrzeugen aufgenommen, codiert und zu einer Zentraldatenbank übermittelt. Mit diesen Sensordaten wird die geographische Datenbank aktualisiert oder ergänzt, indem Sensordatenpunkte eines Links zu einem Objekt wie z. B. einer Straße, mit entsprechenden Positionen der geographischen Datenbank verglichen werden. Dabei können die Fahrzeuge zur Aufnahme der Sensordaten lokale Kopien oder Teile der geographischen Datenbank aufweisen.

Bei einem Verfahren gemäß der DE 197 42 414 A1 werden digitale Straßenkarten aktualisiert und/oder ergänzt. Anhand von Fahrzeugpositionen wird überprüft, ob sich an einer der erfassten Position des Fahrzeugs zugeordneten Position in der digitalen Straßenkarte eine Straße befindet. Es sind dort auch unterschiedliche Kartenversionen des gleichen Herstellers möglich. Wenn sich in der digitalen Straßenkarte keine Straße befindet, wird über das Endgerät des Fahrzeugs eine Verkehrszentrale darüber informiert, damit die Zentrale ihre Straßenkarte aktualisieren kann. Von der Zentrale aus ist eine Aktualisierung von digitalen Karten in anderen Endgeräten vorgesehen.

Bei der DE 198 47 375 A1 werden Straßendaten, die in einem Informationszentrum nicht verfügbar sind, von fahrzeugseitigen Terminals erfasst und zum Informationszentrum übermittelt, basierend auf einer Ortskurve des Standorts des Fahrzeugs, das die Daten über eine voraussichtlich nicht verfügbare Straße meldet Im Informationszentrum wird die Zuverlässigkeit dieser Daten anhand der übermittelten Daten anderer Fahrzeuge bewertet

Aufgabe der vorliegenden Erfindung ist es, Objekte zu codieren und zu decodieren, die in einer empfängerseitigen Datenbank nicht vorhanden sind und/oder wenn zwischen den geographischen Angaben der Datenbanken Unterschiede bestehen.

Diese Aufgabe wird bei dem erfindungsgemäßen Verfahren mit den Maßnahmen des Anspruchs 1 gelöst.

Dabei können die charakteristischen Eigenheiten markante Verläufe der Wege, insbesondere Kurven und ausgeprägte Folgen von Kreuzungen, Abzweigungen und/oder Kurven oder Objekte, sein, die in jeder der verwendeten Datenbanken gleichartig referenziert abgelegt sind.

Das erfindungsgemäße Verfahren kann beispielsweise zur Übertragung von Informationen zu Objekten verwendet werden, deren Vorhandensein in Datenbanken der Empfänger nicht erwartet wird. Ein solches Objekt kann beispielsweise ein neu errichtetes Parkhaus sein - also ein punktförmiges Objekt - oder zusammen mit einer Zufahrtsstraße eine Koordinatenkette bilden. Auch eine neu eröffnete Umgehungsstraße kann beispielsweise mit dem erfindungsgemäßen Verfahren übertragen und in die Datenbank eines Empfängers eingefügt werden. Die das Objekt betreffenden Informationen können dabei eine Ortsangabe als solche, beispielsweise absolute oder relative Koordinaten und Namen, andere Informationen, wie beispielsweise Texte, Bilder, Klangdateien, Videodateien und Internetadressen, oder Navigationsattribute sein, wie beispielsweise Fahrtrichtungen (Einbahnstraßen), Haupt-/Nebenstraßen, Verkehrsbeschränkungen.

Die Übertragung von Informationen nach dem erfindungsgemäßen Verfahren kann über beliebige Medien erfolgen, beispielsweise über Funk oder eine Luftschnittstelle (GSM, Bluetooth, WAP) oder optische Medien. Die Informationen können auch über Datenträger ausgetauscht werden. Ferner sind Übertragungen über verschiedene Netze (ISDN, Internet) möglich.

Formate zur Übertragung der Objekte können beispielsweise sein:
Name des Objekts, Koordinaten des ersten Punktes, Koordinaten des zweiten Punktes usw. oder
Name des Objekts, Koordinaten des ersten Punktes, Koordinatendifferenzen zum zweiten Punkt, Koordinatendifferenzen zum dritten Punkt usw.
Im Rahmen solcher Formate können auch vordefinierte Kurvenstücke übertragen werden.

Bei der Durchführung des erfindungsgemäßen Verfahrens werden als Koordinaten in der Regel die in der Ebene liegenden Koordinaten (geographische Koordinaten, x/y) genügen. Es ist im Rahmen der Erfindung jedoch ebenfalls möglich, die Höhe (z) in die Übertragung und weitere Verarbeitung einzubeziehen.

Neben der bereits genannten Anwendung zur Übertragung von Objekten, die in den Datenbanken der Empfänger nicht oder nicht in gleicher Form vorhanden sind, bestehen weitere Anwendungsmöglichkeiten. So können beispielsweise Informationen darüber übertragen werden, daß Orte zu meiden sind, insbesondere wegen Staus, oder daß Attribute an Orten geändert werden, beispielsweise die Fahrgeschwindigkeiten auf gestauten Strecken vor einer Routenberechnung einzustellen. Es können ferner in den Datenbanken der Empfänger Zusatzstrecken, sogenannte Bedarfsumleitungen, in die digitalen Karten eingetragen werden. Auch können Attribute den digitalen Karten hinzugefügt oder geändert werden, beispielsweise Straßennamen, Öffnungszeiten von Tankstellen und touristisch oder anderweitig interessante Objekte (POI = point of interest).

Das erfindungsgemäße Verfahren kann auch dazu benutzt werden, zwei unterschiedliche digitale Karten aneinander anzubinden, sofern sie gemeinsame zum Vergleich geeignete Objekte aufweisen. Dabei müssen Sender und Empfänger nicht voneinander getrennt sein. Als Sender im Sinne des erfindungsgemäßen Verfahrens kann beispielsweise ein Navigationsgerät dienen, das auf einem austauschbaren Datenträger eine relativ grobe digitale Karte aufweist, während der Empfänger dasselbe Navigationsgerät mit einer beispielsweise detaillierteren digitalen Karte ist.

Ein Benutzer des Navigationsgerätes fährt beispielsweise auf eine Großstadt zu und benutzt dabei ein CD-ROM mit einer digitalen Karte, die von der Großstadt nur die wichtigsten Durchfahrtsstraßen enthält. Zur Zielführung zu einer Nebenstraße kann der Benutzer das CD-ROM durch eines mit einer detaillierten Karte ersetzen. Sofern sein Standort bei dieser Manipulation auf dieser Karte nicht verzeichnet ist, kann eine den Standort enthaltende Koordinatenkette mit Teilen der Durchfahrtsstraßen gebildet und damit der Standort und der Weg bis zum Bereich der detaillierten Karte in diese zusätzlich eingetragen werden.

Je nach Ausbildung des betreffenden Teils des Verkehrswegenetzes kann die zur Erzielung einer Eindeutigkeit beim Empfänger erforderliche Koordinatenkette unterschiedlich ausgebildet sein. Zur Erzielung einer möglichst optimalen Ausprägung, insbesondere möglichst weniger Koordinatenpaare, wird erfindungsgemäß eine ermittelte Koordinatenkette mit Verkehrswegen der Datenbank des Senders verglichen und bei sich ergebenden Mehrdeutigkeiten geändert und/oder um weitere Koordinatenpaare erweitert.

Um eine unnötige Suche nach Teilen der Koordinatenkette, die ohnehin nicht in der empfängerseitigen Datenbank vorhanden sind, zu vermeiden, ist bei einer anderen Weiterbildung vorgesehen, dass diejenigen Teile der mindestens einen Koordinatenkette, von denen eine Entsprechung der Datenbank des Empfängers zu erwarten ist, besonders gekennzeichnet sind.

Ein vorteilhaftes Verfahren zur Decodierung von Objekten, die nach dem erfindungsgemäßen Verfahren codiert sind, besteht darin, daß die Koordinatenkette, die mit dem Objekt empfangen wurde, mit der Datenbank des Empfängers verglichen wird, daß bei Vorliegen von Ähnlichkeiten die mindestens eine Koordinatenkette dem ähnlichen Teil des Verkehrswegenetzes zugeordnet wird und daß entsprechend der geometrischen Lage des zugeordneten Teils die nicht zugeordneten Teile der mindestens einen Koordinatenkette mit den Verkehrswegen der Empfänger-Datenbank verbunden werden.

Damit ist der Empfänger in der Lage auch Informationen zu Orten, die nicht in seiner Datenbank vorhanden sind, zu decodieren und in geeigneter Form auszugeben, beispielsweise auf einem Bildschirm oder durch Sprachausgabe.

Eine weitere Nutzung der decodierten Informationen kann darin bestehen, daß das übertragene Objekt und die sich an das Objekt anschließenden Teile der mindestens einen Koordinatenkette, die nicht auf dem in der Datenbank des Empfängers gespeicherten Verkehrswegenetz liegen, in die Datenbank des Empfängers oder in eine weitere Datenbank eingetragen werden.

Zur Realisierung des Vergleichs der Koordinatenkette mit den in der empfängerseitigen Datenbank gespeicherten Verkehrswegen ist vorzugsweise vorgesehen, daß zum Vergleich Verfahren der Mustererkennung (map matching) angewendet werden.

Ausführungsbeispiele der Erfindung sind in der Zeichnung anhand mehrerer Figuren dargestellt und in der nachfolgenden Beschreibung näher erläutert. Es zeigt:
- Fig. 1: einen Ausschnitt aus einer Straßenkarte,
- Fig. 2: einen Ausschnitt aus einer digitalen Straßenkarte beim Empfänger,
- Fig. 3: eine zur erfindungsgemäßen Codierung erzeugte Koordinatenkette,
- Fig. 4: eine weitere zur erfindungsgemäßen Codierung erzeugte Koordinatenkette,
- Fig. 5: die auf die digitale Straßenkarte gemäß Fig. 2 abgebildete Koordinatenkette gemäß Fig. 3,
- Fig. 6: die auf die digitale Straßenkarte gemäß Fig. 2 abgebildete Koordinatenkette gemäß Fig. 4,
- Fig. 7: eine weitere Anwendung des erfindungsgemäßen Verfahrens in schematischer Darstellung und
- Fig. 8: ein Blockschaltbild einer Einrichtung zur Übertragung von Informationen gemäß der Erfindung.

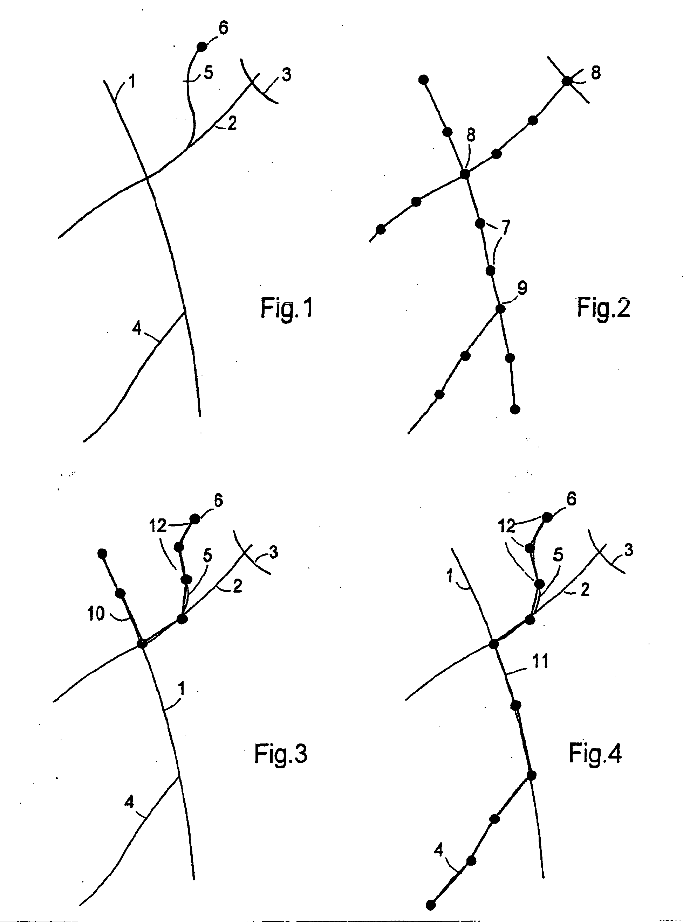

Der in Fig. 1 dargestellte Ausschnitt einer Straßenkarte zeigt eine reale Situation mit mehreren Straßen 1, 2, 3, 4. Von der Straße 2 zweigt die Zufahrt 5 eines neu eingerichteten Parkhauses 6 ab.

Die zur Decodierung von ortsbezogenen Meldungen im Empfänger vorhandene Straßenkarte gemäß Fig. 2 enthält die Straßen in Form von Verbindungslinien zwischen einzelnen durch ihre Koordinaten, gegebenenfalls auch Namen oder Codenummern, festgelegten Orten, die unter anderem einfache Wegpunkte 7, Kreuzungen 8, Abzweigungen 9 oder andere Objekte, wie beispielsweise interessierende Gebäude, sind.

Soll von einem Sender eine das Parkhaus 6 (Fig. 1) betreffende Nachricht übertragen werden, so kann ein mit der Datenbank gemäß Fig. 2 ausgerüsteter Empfänger diese Nachricht nicht decodieren, das heißt, das Parkhaus kann räumlich nicht zugeordnet werden. Um dieses mit dem erfindungsgemäßen Verfahren zu ermöglichen, wird senderseitig eine der in den Figuren 3 und 4 gezeigten Koordinatenkette 10, 11 gebildet, die zu dem Parkhaus 6 hinführt.

Nach der Übertragung wird die Koordinatenkette mit dem Verkehrswegenetz in der Datenbank des Empfängers verglichen (Map matching). Dabei ist ein Vergleich mit dem gesamten Verkehrswegenetz, beispielsweise dem von Deutschland, nicht erforderlich, da voraussetzungsgemäß die in den Datenbanken verwendeten Koordinatenangaben etwa übereinstimmen. Durch das Map matching werden die Koordinaten der zu der Koordinatenkette gehörenden Punkte so verschoben, daß diejenigen, welche Entsprechungen im empfängerseitigen Verkehrswegenetz aufweisen, auf diesem zu liegen kommen. Die Punkte 12 der Koordinatenkette liegen nicht auf dem empfängerseitigen Verkehrswegenetz. Dieses kann jedoch dahingehend ergänzt werden, beispielsweise in der Datenbank selbst oder in einer speziellen der Ergänzungen vorgesehenen weiteren Datenbank.

Wie bereits erwähnt, kann gemäß einer Weiterbildung der Erfindung vorgesehen sein, daß die Punkte der Koordinatenketten 10, 11 die erwartungsgemäß auf Verkehrswegen (Straßen) liegen, besonders hervorgehoben werden. Damit wird der Suchvorgang in der empfängerseitigen Datenbank vereinfacht bzw. beschleunigt, denn eine Suche, ob eventuell die Punkte 12 auf Verkehrswegen liegen und gegebenenfalls auch eine charakteristische Eigenheit aufweisen, ist dann nicht erforderlich.

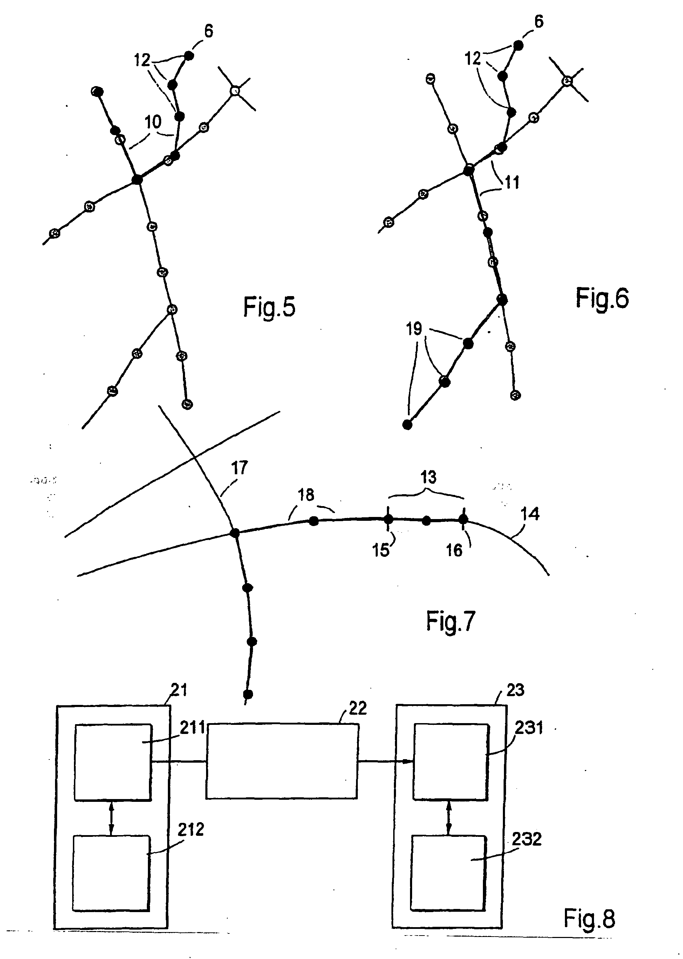

Fig. 5 und Fig. 6 zeigen die betroffenen Teile der empfängerseitigen Datenbank mit den bereits zur Deckung gebrachten Koordinatenketten. Damit liegt in der empängerseitigen Datenbank eine zur Zielführung geeignete Information darüber vor, wo die Abfahrt zum Parkhaus 6 von der Straße 2 abzweigt und wie die Zufahrt 5 zum Parkhaus 6 verläuft. Ist beispielsweise in der empfängerseitigen Datenbank die Straße 4 (Fig. 4) nicht vorhanden, so ist eine Eintragung der entsprechenden Punkte 19 der Koordinatenkette häufig nicht zweckmäßig. Bei dem erfindungsgemäßen Verfahren ist daher vorzugsweise vorgesehen, nur die an das Objekt 6 anschließenden und nicht in der empfängerseitigen Datenbank vorhandenen Punkte 12 in die Datenbank einzutragen.

Bei dem in Fig. 7 dargestellten Ausführungsbeispiel soll eine Staumeldung übertragen werden, die sich auf einen Stau 13 auf einer Straße 14 bezieht, der sich von 15 bis 16 erstreckt. Für den Fall, daß nicht die Orte 15 und 16, wohl aber die Straße 14 und eine weitere Straße 17 in der empfängerseitigen Datenbank vorhanden sind, wird im Sender eine Koordinatenkette gebildet, die sich über einen Teil der Straße 14 und über einen Teil der Straße 17 erstreckt. In dem in Betracht zu ziehenden Ausschnitt des Straßennetzes befinden sich keine Straßenabschnitte, die einen solchen Winkel miteinander bilden und etwa die geographischen Richtungen, wie die Straßen 14 und 17, aufweisen. Deshalb ordnet der Empfänger die Koordinatenkette 18, wie in Fig. 7 dargestellt, dem Kreuzungsbereich der Straßen 14 und 17 zu, womit auch die Punkte 15 und 16 als Stauanfang und -ende festgelegt sind und decodiert werden können.

Die in Fig. 8 dargestellte Einrichtung besteht aus einem Sender 21, einem Übertragungssystem 22 und einem Empfänger 23. Das zu sendende Objekt wird in einem Codierer 211 mit dem erfindungsgemäßen Verfahren codiert, wobei sowohl das Objekt 21 selbst als auch die zur Ableitung der Koordinatenkette erforderlichen Verkehrswege einer Datenbank 212 entnommen werden. Der Codierer 211 übergibt das Objekt und die Koordinatenkette an das Übertragungssystem 22. Im Empfänger 23 übernimmt ein Decodierer 231 das Objekt und die Koordinatenkette. Der Decodierer vergleicht die Koordinatenkette mit den Verkehrswegen in seiner Datenbank 232. Findet der Decodierer 231 in der Datenbank 232 einen Teil des Verkehrswegenetzes, der sehr ähnlich oder gleich der Koordinatenkette ist, ist das Objekt decodiert bzw. örtlich referenziert.

## Patentansprüche

1. Verfahren zur Codierung von Objekten in einem Verkehrswegenetz, zu denen Informationen von jeweils einem Sender an einen Empfänger in einem Navigationsgerät übertragen werden und zu deren Codierung und Decodierung im Sender und Empfänger unterschiedliche Datenbanken, insbesondere digitale Karten des Verkehrswegenetzes, benutzt werden, wobei die Objekte mit jeweils mindestens einer Koordinatenkette versehen werden, die mindestens teilweise auf Verkehrswegen liegt, die auch in der Datenbank des Empfängers enthalten sind, und charakteristische Eigenheiten von Teilen des Verkehrswegenetzes umfasst und wobei eine ermittelte Koordinatenkette mit Verkehrswegen der Datenbank des Senders verglichen und bei sich ergebenden Mehrdeutigkeiten geändert und/oder um weitere Koordinatenpaare erweitert wird.

2. Verfahren nach Anspruch 1, **dadurch gekennzeichnet, daß** die charakteristischen Eigenheiten markante Verläufe der Wege, insbesondere Kurven und ausgeprägte Folgen von Kreuzungen, Abzweigungen und/oder Kurven, sind.

3. Verfahren nach Anspruch 1, **dadurch gekennzeichnet, daß** die charakteristischen Eigenheiten Objekte sind, die in jeder der verwendeten Datenbanken gleichartig referenziert abgelegt sind.

4. Verfahren nach einem der vorhergehenden Ansprüche, **dadurch gekennzeichnet, daß** diejenigen Teile der mindestens einen Koordinatenkette, von denen eine Entsprechung der Datenbank des Empfängers zu erwarten ist, besonders gekennzeichnet sind.

5. Verfahren zur Decodierung von Objekten, die nach dem Verfahren nach einem der Ansprüche 1 bis 4 codiert sind, in einem Empfänger, **dadurch gekennzeichnet, daß** die Koordinatenkette, die mit dem Objekt empfangen wurde, mit der Datenbank des Empfängers verglichen wird, daß bei Vorliegen von Ähnlichkeiten die mindestens eine Koordinatenkette dem ähnlichen Teil des Verkehrswegenetzes zugeordnet wird und daß entsprechend der geometrischen Lage des zugeordneten Teils die nicht zugeordneten Teile der mindestens einen Koordinatenkette mit den Verkehrswegen der Empfänger-Datenbank verbunden werden.

6. Verfahren nach Anspruch 5, **dadurch gekennzeichnet, daß** das übertragene Objekt und die sich an das Objekt anschließenden Teile der mindestens einen Koordinatenkette, die nicht auf dem in der Datenbank des Empfängers gespeicherten Verkehrswegenetz liegen, in die Datenbank des Empfängers eingetragen werden.

7. Verfahren nach einem der Ansprüche 5 oder 6, **dadurch gekennzeichnet, daß** das übertragene Objekt und die sich an das Objekt anschließenden Teile der mindestens einen Koordinatenkette, die nicht auf dem in der Datenbank des Empfängers gespeicherten Verkehrswegenetz liegen, in eine weitere Datenbank des Empfängers eingetragen werden.

8. Verfahren nach einem der Ansprüche 5 bis 7, **dadurch gekennzeichnet, daß** zum Vergleich Verfahren der Mustererkennung (map matching) angewendet werden.

9. Verfahren nach einem der vorhergehenden Ansprüche, **dadurch gekennzeichnet, daß** die Koordinatenkette außer Koordinaten in der Ebene Höhenkoordinaten aufweist.

## Claims

1. Method for encoding objects in a traffic route network, information on said objects being transmitted from in each case one transmitter to a receiver in a satellite navigation device and to use, in the transmitter and receiver, different databases, in particular digital maps of the traffic route network, for encoding and decoding said information, wherein the objects are provided with, in each case, at least one co-ordinate chain which is located at least partially on traffic routes which are also contained in the database of the receiver, and comprises characteristic peculiarities of parts of the traffic route network, and wherein a calculated coordinate chain is compared with traffic routes in the databases of the transmitter and, when ambiguities occur, said coordinate chain is changed and/or further coordinate pairs are added to it.

2. Method according to Claim 1, **characterized in that** the characteristic peculiarities are marked profiles of the routes, in particular bends and striking sequences of intersections, junctions and/or bends.

3. Method according to Claim 1, **characterized in that** the characteristic peculiarities are objects which are stored in each of the databases used, while being referenced in the same way.

4. Method according to one of the preceding claims, **characterized in that** those parts of the at least one co-ordinate chain which are expected to correspond to the database of the receiver are specially characterized.

5. Method for decoding objects, which are encoded according to the method according to one of Claims 1 to 4, in a receiver, **characterized in that** the co-ordinate chain which was received with the object is compared with the database of the receiver, **in that**, when similarities are present, the at least one co-ordinate chain is assigned to the similar part of the traffic route network, and **in that**, in accordance with the geometric position of the assigned part, the parts of the at least one co-ordinate chain which are not assigned are connected to the traffic routes of the receiver database.

6. Method according to Claim 5, **characterized in that** the transmitted object and the parts of the at least one co-ordinate chain which adjoin the object and which are not located on the traffic route network stored in the database of the receiver are input into the database of the receiver.

7. Method according to one of Claims 5 or 6, **characterized in that** the transmitted object and the parts of the at least one co-ordinate chain which adjoin the object and which are not located on the traffic route network stored in the database of the receiver are input into a further database of the receiver.

8. Method according to one of Claims 5 to 7, **characterized in that** pattern recognition (map matching) methods are applied for the comparison.

9. Method according to one of the preceding claims, **characterized in that**, in addition to planar coordinates, the co-ordinate chain has altitude coordinates.

## Revendications

1. Procédé pour coder des objets dans un réseau de voies de circulation, pour lesquels objets des informations sont transmises à chaque fois d'un émetteur à un récepteur dans un appareil de navigation et pour le codage et le décodage desquels on utilise des bases de données différentes, en particulier des cartes numériques du réseau de voies de circulation, dans l'émetteur et dans le récepteur, les objets étant chacun munis d'au moins une chaîne de coordonnées qui se trouve au moins partiellement sur des voies de circulation qui sont aussi contenues dans la base de données du récepteur et qui comprend des propriétés caractéristiques de parties du réseau de voies de circulation, une chaîne de coordonnées trouvée étant comparée à des voies de circulation de la base de données de l'émetteur et, en présence d'ambiguïtés qui se manifestent, étant modifiée et/ou complétée par d'autres paires de coordonnées.

2. Procédé selon la revendication 1,
**caractérisé en ce que**
les propriétés caractéristiques sont des tracés distinctifs des voies, en particulier des courbes et des suites définies de croisements, des bifurcations et/ou des courbes.

3. Procédé selon la revendication 1,
**caractérisé en ce que**
les propriétés caractéristiques sont des objets qui sont enregistrés sous des références analogues dans chacune des bases de données utilisées.

4. Procédé selon une des revendications précédentes,
**caractérisé en ce que**
les parties de l'au moins une chaîne de coordonnées dont une correspondance avec la base de données du récepteur est prévue sont **caractérisées** de façon particulière.

5. Procédé de décodage d'objets qui sont codés par le procédé selon une des revendications 1 à 4, dans un récepteur,
**caractérisé en ce que**
la chaîne de coordonnées qui a été reçue avec l'objet est comparée avec la base de données du récepteur, **en ce que**, en présence de similitudes, l'au moins une chaîne de coordonnées est associée à la partie similaire du réseau de voies de circulation et **en ce que**, selon la position géométrique de la partie correspondante, les parties non correspondantes de l'au moins une chaîne de coordonnées sont reliées aux voies de circulation de la base de données du récepteur.

6. Procédé selon la revendication 5,
**caractérisé en ce que**
l'objet transmis et les parties de l'au moins une chaîne de coordonnées raccordées à l'objet, qui ne se trouvent pas sur le réseau de voies de circulation mémorisé dans la base de données du récepteur sont introduits dans la base de données du récepteur.

7. Procédé selon une des revendications 5 ou 6,
**caractérisé en ce que**
l'objet transmis et les parties de l'au moins une chaîne de coordonnées raccordées à l'objet qui ne se trouvent pas sur le réseau de voies de circulation mémorisé dans la base de données du récepteur sont introduits dans une autre base de données du récepteur.

8. Procédé selon une des revendications 5 à 7,
**caractérisé en ce que**,
pour la comparaison, on utilise des procédés de la reconnaissance de motifs (map matching).

9. Procédé selon une des revendications précédentes,
**caractérisé en ce que**
la chaîne de coordonnées présente des coordonnées de hauteur en supplément des coordonnées dans le plan.
